# FASCICULE DE BREVET EUROPEEN

(11) **EP 0 415 826 B1**
(45) Date de publication et mention de la délivrance du brevet: **10.11.1993**
(21) Numéro de dépôt: 90402345.4
(22) Date de dépôt: 23.08.1990
(51) Int. Cl.: C03B 23/03, C03B 35/14

(54) **Dispositif de bombage de feuilles de verre en position horizontale**
Vorrichtung zum Biegen von Glasscheiben in waagerechter Position
Apparatus for bending glass-sheets in a horizontal position

(30) Priorité: 01.09.1989 DE 3928968
(43) Date de publication de la demande: 06.03.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Radermacher, Herbert, B-4730 Raeren (BE); Kuster, Hans-Werner, D-5100 Aachen (DE)
(74) Mandataire: Menes, Catherine

(56) Documents cités:
- DE-A- 1 471 872
- US-A- 3 545 951
- US-A- 4 743 285

## Description

L'invention a pour objet un dispositif de bombage de feuilles de verre en position horizontale. Plus précisément l'invention concerne un perfectionnement à un dispositif comprenant un poste de bombage avec une forme de bombage disposée au-dessus du niveau de transport des feuilles de verre et une bande sans fin guidée par des rouleaux, réalisée dans un matériau souple et résistant à la chaleur, transportant les feuilles de verre chauffées à température de bombage du four au poste de bombage et de ce dernier au poste de trempe ou de refroidissement.

L'invention s'applique à la fabrication de vitrages automobiles bombés/trempés.

Un dispositif tel que celui évoqué ci-dessus est connu de DE-A-14 71 872. Dans ce cas, un cadre de bombage à hauteur réglable est disposé sous le brin supérieur de la bande sans fin. Ce cadre soulève la bande et la feuille de verre s'y trouvant et les presse contre la forme de bombage supérieure fixe. Ensuite, le cadre redescend et la feuille de verre bombée est évacuée par la bande sans fin à nouveau plane. En vue d'éviter sa déformation pendant son évacuation, la feuille de verre bombée est refroidie par soufflage d'air froid lors de la descente du cadre. De ce fait, ce procédé ne peut être mis en oeuvre que pour des feuilles de verre de plus de 6 mm, le refroidissement lors de la descente interdisant toute trempe ultérieure de feuilles de verre d'épaisseur moindre.

On connaît également de US-A-4 318 728, une installation comportant deux formes de bombage complémentaires placées de part et d'autre du brin supérieur de la bande sans fin, déplacées selon des mouvements verticaux synchrones. Dans ce cas aussi, la bande sans fin est tendue en plan et la feuille de verre bombée n'y repose après son bombage que le long de zones linéaires d'où un risque considérable d'une déformation due à son propre poids.

L'invention a pour but un dispositif de bombage du type mentionné précédemment, mais avec lequel est minimisé le risque d'une déformation de la feuille de verre bombée sous l'effet de son propre poids lors de son transfert du poste de bombage au poste de trempe, sans pour autant refroidir la feuille de verre bombée à une température trop basse pour une trempe.

Ce but est atteint selon l'invention par un dispositif de bombage de feuilles de verre en position horizontale, comprenant un poste de bombage, une forme de bombage disposée au-dessus de niveau de transport des feuilles de verre et une bande sans fin guidée par des rouleaux, réalisée dans un matériau souple et résistant à la chaleur, transportant la feuille de verre chauffée à température de bombage d'un four au poste de bombage et de celui-ci à un poste de trempe ou de refroidissement. Ce dispositif étant remarquable en ce que le rouleau supérieur disposé à la sortie du poste de bombage a une courbure qui correspond à la courbure transversale de la feuille de verre bombée et que le rouleau inférieur suivant a une forme complémentaire de celle dudit rouleau supérieur de façon à compenser les différences de longueur entre la partie centrale et les parties latérales de la bande sans fin dues à la courbure du rouleau supérieur.

Comme il ressort de la définition donnée ci-dessus, le convoyeur évacuant les feuilles de verre bombées hors du poste de bombage présente dans la zone de bombage proprement dite une courbure adaptée à celle de la forme de bombage, de sorte que la bande sans fin soutient une large portion de la surface de la feuille bombée. Ce soutien est maintenu lors du transfert vers le poste de trempe ou de refroidissement. Plus la feuille de verre a tendance à se déformer sous l'effet de son propre poids et plus ce soutien se renforce limitant ainsi les risques de formation de courbures non désirées. Au voisinage immédiat du rouleau supérieur, une génératrice transversale de la feuille de verre repose toute entière sur la bande sans fin.

Selon un premier mode de réalisation de l'invention, le rouleau supérieur en aval du poste de bombage présente la forme d'un paraboloïde de révolution, hyperbolique dans le cas d'une forme de bombage dont la concavité est tournée vers le haut et le rouleau inférieur suivant a la forme du paraboloïde de révolution de signe opposé.

Selon un second mode de réalisation de l'invention, les rouleaux supérieur et inférieur se composent chacun d'une tige ronde avec une section centrale courbe et d'un manchon flexible en appui rotatif sur la tige, réalisé en un matériau souple résistant à la torsion. Avantageusement les deux tiges rondes sont de même courbure et les manchons flexibles sont entraînés à la même vitesse tangentielle que les rouleaux cylindriques droits placés eux côté four. Ces tiges courbes sont de préférence montées selon des positions angulaires réglables de sorte qu'il est facile de modifier le rayon de courbure transversale dans une limite assez large.

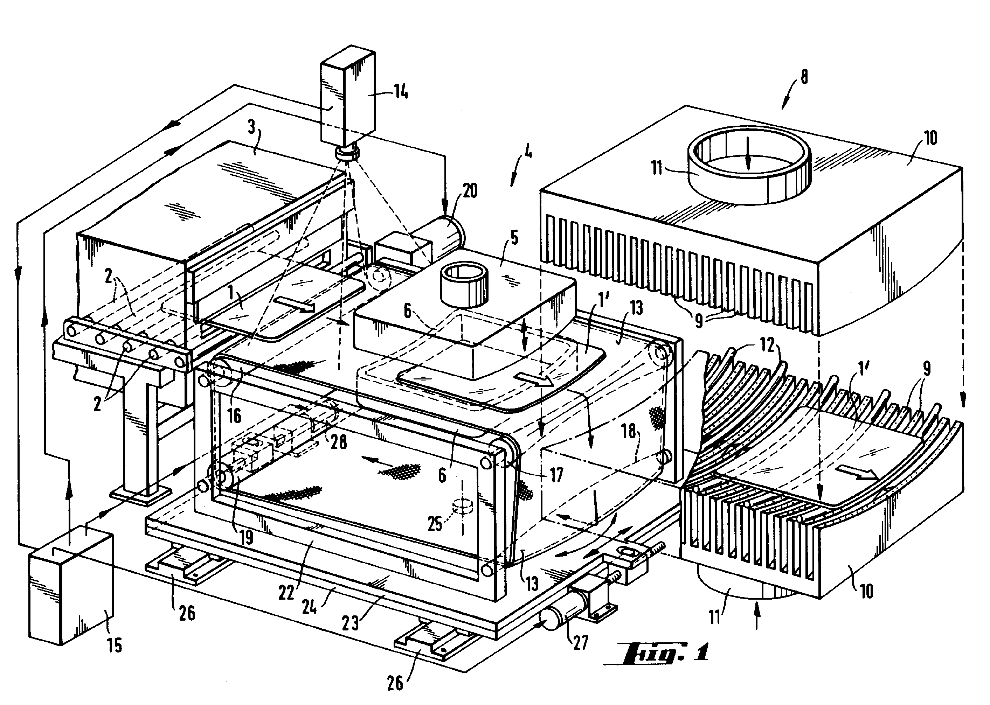

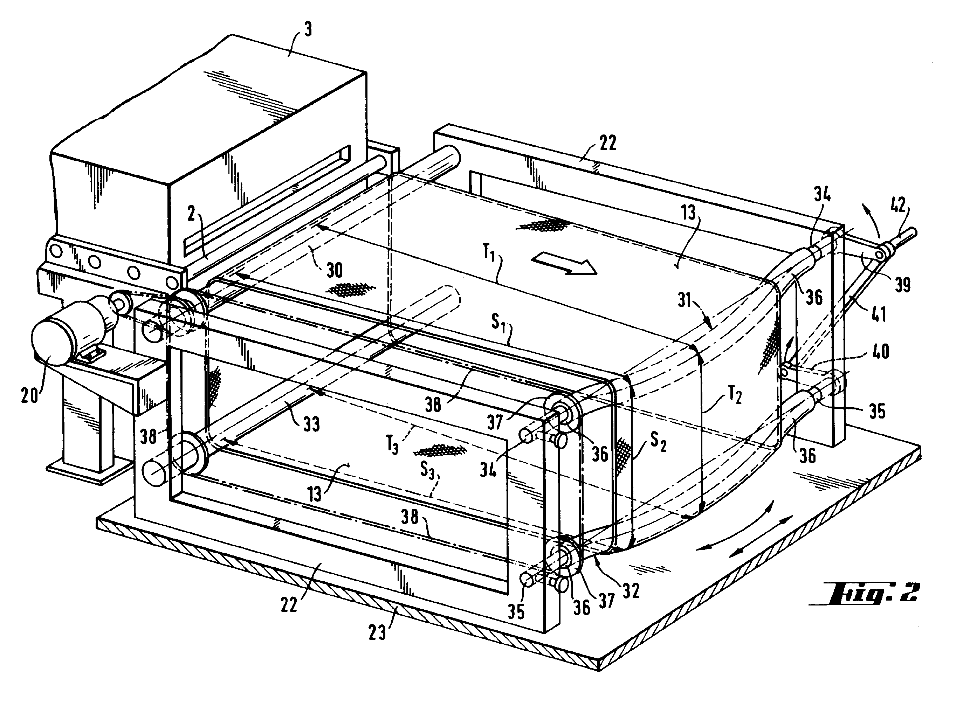

D'autres détails et caractéristiques avantageuses de l'invention ressortent de la description faite ci-après en référence aux dessins annexés qui représentent :
. **figure 1** : un dispositif conforme au premier mode de réalisation de l'invention,
. **figure 2** : un dispositif conforme au second mode de réalisation de l'invention.

Les feuilles de verre 1 sont transportées par un convoyeur à rouleaux 2 au travers d'un four 3 qui les chauffe à la température de bombage. Le poste de bombage 4 est situé juste en aval du four 3. Il comporte une forme de bombage 5 disposée au-dessus du niveau de transport des feuilles de verre 1, du type forme pleine à concavité tournée vers le haut. De manière connue, la forme de bombage 5 est mobile verticalement. Elle coopère avec une contreforme 6 pleine ou de préférence constituée par un cadre ouvert en son centre, fixe ou mobile verticalement.

Le poste de bombage 4 est suivi d'un poste de trempe ou de refroidissement 8 où le cas échéant les feuilles de verre bombées 1' sont trempées par un refroidissement intense effectué au moyen de buses 9 de caissons de soufflage 10 alimentés par des conduits d'air 11. Dans ce poste de trempe 8, les feuilles de verre bombées 1' sont transportées sur des tiges cintrées 12 dont la courbure correspond à la courbure des feuilles de verre 1'.

Entre le four 3 et le poste de trempe 8, les feuilles de verre sont transportées par une bande sans fin 13 réalisée dans un matériau souple résistant à la chaleur. La feuille de verre reste en place sur la bande sans fin 13 lors du pressage par les formes 5 et 6.

Les matériaux adaptés à la réalisation de la bande sans fin 13 sont par exemple des tissus en fibre de verre ou des tissus ou tricots en fibres d'un métal résistant à la chaleur et la corrosion. Les tissus ou tricots faits de fils dont les fibres élémentaires en alliage chrome-nickel ont un diamètre inférieur à 50 microns, et de préférence inférieur à 20 microns, sont particulièrement adaptés à cet emploi. De tels tissus ou tricots en fibres métalliques sont décrits dans le brevet EP-A-312 439. Ces matériaux présentent non seulement la résistance à la chaleur requise mais possèdent aussi une bonne résistance mécanique et les caractéristiques d'isolation thermique adéquates. Ils présentent en outre une élasticité et une possibilité de déformation suffisantes leur permettant de s'adapter aux formes de bombage.

Avant l'opération de pressage, il est nécessaire que la feuille de verre 1 soit précisément positionnée sous la forme de bombage 5 à l'aide de la bande sans fin 13. Pour cela, on prévoit avantageusement un dispositif optique, dans le cas présent une caméra vidéo 14 qui saisit la position de la feuille de verre 1 à son entrée dans le poste de bombage 4, en aval de forme 5. Les signaux émis par la caméra 14 sont analysés par une unité de traitement des données 15 commandant d'une part le moteur d'entraînement 20 de la bande sans fin 13 et le cas échéant, d'autres moteurs affectés au déplacement transversal et/ou à la position angulaire de la bande 13, ce qui permet un ajustement complet de la position de la feuille de verre 1.

Lorsque la courbure souhaitée conférée à la feuille de verre est faible, la contreforme 6 n'est pas nécessaire, les forces exercées par la bande sans fin 13 étant suffisantes pour presser la feuille de verre contre la forme supérieure 5. Par contre cette contreforme 6 devient utile si la courbure est plus prononcée. La contreforme 6 peut être montée fixe sous le brin supérieur de la bande sans fin 13 qui est alors abaissé par la descente de la forme de bombage 5 qui suit immédiatement le positionnement de la feuille de verre, ladite forme 5 s'appuyant sur la contreforme du type cadre ouvert en son centre 6.

On peut également choisir de procéder avec une contreforme 6 mobile venant rencontrer une forme supérieure 5 fixe ou avec deux formes de bombage rapprochées mutuellement.

La bande sans fin 13 est guidée par quatre rouleaux 16, 17, 18 et 19. Ces rouleaux sont de préférence entraînés par un moteur commun 20 qui comme indiqué plus haut est piloté par l'unité de traitement des données 15 assurant non seulement le positionnement des feuilles de verre dans le poste de bombage mais aussi une parfaite synchronisation de la vitesse de la bande 13 avec celle des rouleaux 2 du four 3 - afin d'éviter un glissement de la feuille de verre 1 pénétrant dans le poste de bombage 4 - et une accélération de la bande 13 dans l'étape de transfert vers le poste de trempe 8.

Les deux rouleaux 16 et 19 situés côté four 3 sont des rouleaux cylindriques. Le rouleau 17 en aval du poste de bombage est un hyperboloïde de révolution, le rouleau 18 qui lui fait suite est de même un hyperboloïde de révolution mais de signes opposés, sa surface périphérique étant formée par la surface de révolution générée par une courbe correspondant à la courbure transversale de la feuille de verre, avec cependant une rotation de 180° de celle-ci. De cette façon, la différence de longueurs entre la zone centrale de la bande 13 et les zones latérales est compensée par la complémentarité des diamètres des rouleaux 17 et 18.

Les rouleaux 16 à 18, la bande sans fin 13 et son moteur d'entraînement 20 sont en appui sur un cadre commun 22 disposé sur une platine 23. La platine 23 est montée sur une plaque parallèle 24 par un pivot 25 placé au centre, autour duquel la platine 23 peut pivoter pour un déplacement angulaire. Au moyen de rails 26, la plaque 24 peut être déplacée transversalement, perpendiculairement à l'axe longitudinal de la bande 13. Ce déplacement transversal est assuré par les moteurs 27 et 28 pilotés également par l'unité 15 de traitement des données transmises par la caméra vidéo 14. Les deux moteurs 27 et 28 peuvent éventuellement commandés des déplacements d'amplitudes différentes en vue de réaliser un décalage angulaire permettant ainsi une orientation transversale et angulaire très précise de la feuille de verre 1.

La figure 2 illustre le second mode de réalisation proposé selon l'invention. Dans ce cas, la bande sans fin 13 est guidée par quatre rouleaux 30, 31, 32, 33, les deux rouleaux amont, situés près du four 3 étant des rouleaux cylindriques droits. Les deux rouleaux disposés à la sortie du poste de bombage sont constitués par des tiges rondes dont la section centrale est cintrée, montées sur des appuis pivotant pour un réglage angulaire sur chacune des tiges 34 et 35. Ces tiges 34 et 35 sont entourées par des manchons flexibles 36, souples mais résistants à la torsion dont les extrémités sont par ailleurs liées à des roues dentées 37 engrenant sur une chaîne 38 les mettant en rotation, les tiges cintrées 34 et 35 étant par contre fixées dans leur position angulaire dans l'espace. Le moteur 20 peut ainsi entraîner les manchons 36 en même temps et à la même vitesse tangentielle que celle des rouleaux 30 et 33.

Les rouleaux 31 et 32 sont par exemple construits suivant l'enseignement de la demande de brevet EP-A-107 565.

La position angulaire des tiges cintrées 34 et 35 est réglée de manière à ce que la somme des sections S₁+S₂+S₃ soit égale à la somme des sections T₁+T₂+T₃, compensant ainsi la différence initiale entre les sections S₁ et T₁.

Les rouleaux 31, 32 se composant de tiges cintrées et de manchons rotatifs, la bande sans fin 13 présente une courbure transversale variant en fonction de l'inclinaison de la tige supérieure 34, ce qui permet d'adapter sa courbure aux différents types de formes de bombage 5 sans devoir changer de rouleaux 31, 32. La courbure transversale peut ainsi être réglée entre un rayon infini, correspondant à l'état plan et le rayon de courbure de la tige cintrée 34, la position angulaire horizontale de la tige 34 correspondant à un état plan de la bande 13, la position verticale au plus petit rayon de courbure accessible.

Lorsque la section centrale cintrée de la tige 34 est orientée verticalement, la tige inférieure 35 est également orientée verticalement, c'est-à-dire dans la même position angulaire. Si la tige supérieure 34 est orientée horizontalement, il en sera de même pour la tige inférieure 35, mais avec une rotation de 180° en vue d'obtenir l'effet de compensation des longueurs. Entre ces deux extrêmes, les tiges 34 et 35 sont orientées avec des décalages angulaires effectués en sens contraire, c'est pourquoi il est avantageux de coupler les deux tiges cintrées 34 et 35 par des manivelles 39, 40 et une bielle 41 liant les deux manivelles 39 et 40 dans leurs mouvements de rotation, la poignée 42 permettant alors de modifier automatiquement la courbure transversale de la bande sans fin 13.

De même que la construction décrite à l'aide de la figure 1, la construction proposée à la figure 2 opère avec un cadre 22 dont la position transversale et de préférence également la position angulaire horizontale sont réglables en vue d'un parfait positionnement des feuilles de verre.

## Revendications

1. Dispositif de bombage de feuilles de verre (1, 1') en position horizontale, comprenant un poste de bombage (4) avec une forme de bombage (5) disposée au-dessus du niveau de transport des feuilles de verre (1, 1') et une bande sans fin (13) guidée par des rouleaux (16, 17, 18, 19 ; 30, 31, 32, 33), réalisée dans un matériau souple et résistant à la chaleur, transportant la feuille de verre (1, 1') chauffée à température de bombage d'un four (3) au poste de bombage (4) et de celui-ci à un poste de trempe ou de refroidissement (8), **caractérisé en** ce que le rouleau (17, 31) supérieur disposé à la sortie du poste de bombage (4) a une courbure qui correspond à la courbure transversale de la feuille de verre bombée (1'), le rouleau inférieur suivant (18, 32) ayant une forme complémentaire de celle du rouleau (17, 31) de façon à compenser les différences de longueur entre la partie centrale et les parties latérales de la bande sans fin (13) dues à la courbure du rouleau (17, 31).

2. Dispositif selon la revendication 1, **caractérisé en** **ce que** les rouleaux supérieurs (17, 31) et inférieurs (18, 32) présentent la forme de paraboloïdes de révolution de signes opposés.

3. Dispositif selon la revendication 1, **caractérisé en** **ce que** les rouleaux supérieur (31) et inférieur (32) se composent chacun d'une tige (ronde 34, 35) avec une section centrale cintrée et d'un manchon flexible (36) en appui rotatif sur la tige (34, 35) réalisé en un matériau souple résistant à la torsion.

4. Dispositif selon la revendication 3, **caractérisé en** **ce que** les manchons flexibles (36) sont entraînés à la même vitesse tangentielle que les rouleaux cylindriques droits (30, 33) placés au côté du four (3).

5. Dispositif selon la revendication 3 ou 4, **caractérisé** **en ce que** les tiges cintrées (34, 35) des rouleaux (31, 32) sont montées de façon réglable angulairement.

6. Dispositif selon la revendication 5, **caractérisé en** **ce que** les tiges cintrées (34, 35) sont couplées dans des sens de rotation opposés.

7. Dispositif selon l'une des revendications 1 à 6, **caractérisé en ce qu**'en vue du positionnement de la feuille de verre (1) dans le poste de bombage (4), le moteur d'entraînement (20) de la bande sans fin (13) est commandé par une unité de traitement de données (15) analysant les signaux, en provenance d'un dispositif optique (14), qui représentent la position de la feuille de verre (1) sur la bande sans fin (13).

8. Dispositif selon l'une des revendications précédentes, **caractérisé** en **ce** que les rouleaux (16, 17, 18, 19 ; 30, 31, 32, 33) sont disposés sur un cadre commun (22) pouvant se déplacer transversalement par rapport à l'axe longitudinal de la bande sans fin (13).

9. Dispositif selon la revendication 8, **caractérisé** **par** des moteurs (27, 28) pour le déplacement transversal du cadre (22) commandés par une unité de traitement des données (15) analysant les signaux, en provenance d'un dispositif optique (14), qui représentent la position de la feuille de verre (1) sur la bande sans fin (13).

10. Dispositif selon la revendication 8 ou 9, **caractérisé** **en ce que** le cadre (22) est monté selon un angle réglable.

11. Dispositif selon une ou plusieurs des revendications 1 à 10, **caractérisé en ce que** la bande sans fin (13) est réalisée dans un tissu ou tricot en fils dont les fibres élémentaires, en alliage chrome-nickel, ont un diamètre inférieur à 50 microns et de préférence inférieur à 20 microns.

## Patentansprüche

1. Vorrichtung zum Biegen von Glasscheiben (1,1') in horizontaler Lage, mit einer Biegestation (4) mit einer oberhalb der Transportebene der Glasscheiben (1,1') angeordneten Biegeform (5) und einem die auf Biegetemperatur erwärmte Glasscheibe (1,1') von einem Ofen (3) zur Biegestation (4) und von dieser zu einer Vorspann- oder Kühlstation (8) transportierenden, durch Walzen (16,17,18,19; 30,31,32,33) geführten, aus einem biegsamen und hitzebeständigen Material bestehenden Endlosband (13), **dadurch gekennzeichnet**, daß die am Ausgang der Biegestation (4) angeordnete obere Walze (17,31) eine Kurvenform aufweist, die der Querbiegung der gebogenen Glasscheibe (1') entspricht, und daß die folgende untere Walze (18,32) eine der Form der Walze (17,31) komplementäre Form aufweist derart, daß die durch die Kurvenform der Walze (17,31) bedingten Längenunterschiede zwischen dem Mittelbereich und den Seitenbereichen des Endlosbandes (13) kompensiert werden.

2. Vorrichtung nach Anspruch 1, dadurch gekennzeichnet, daß die oberen (17,31) und unteren (18,32) Walzen die Form von Rotationsparaboloiden mit entgegengesetzten Vorzeichen aufweisen.

3. Vorrichtung nach Anspruch 1, dadurch gekennzeichnet, daß die obere (31) und die untere (32) Walze jeweils aus einem Rundstab (34,35) mit einem gebogenen Mittelabschnitt und einer auf dem Rundstab (34,35) drehbar gelagerten Hülse (36) aus einem flexiblen und torsionsfesten Material bestehen.

4. Vorrichtung nach Anspruch 3, dadurch gekennzeichnet, daß die flexiblen Hülsen (36) mit der gleichen Umfangsgeschwindigkeit angetrieben sind wie die an der Seite des Ofens (3) angeordneten geraden zylindrischen Walzen (30,33).

5. Vorrichtung nach Anspruch 3 oder 4, dadurch gekennzeichnet, daß die gebogenen Rundstäbe (34,35) der Walzen (31,32) winkelverstellbar gelagert sind.

6. Vorrichtung nach Anspruch 5, dadurch gekennzeichnet, daß die gebogenen Rundstäbe (34,35) in entgegengesetztem Drehsinn gekoppelt sind.

7. Vorrichtung nach einem der Ansprüche 1 bis 6, dadurch gekennzeichnet, daß für die Positionierung der Glasscheibe (1) in der Biegestation (4) der Antriebsmotor (20) des Endlosbandes (13) von einer Datenverarbeitungseinrichtung (15) angesteuert wird, die die von einer optischen Einrichtung (14) kommenden Signale, die die Lage der Glasscheibe (1) auf dem Endlosband (13) wiedergeben, auswertet.

8. Vorrichtung nach einem der vorhergehenden Ansprüche, dadurch gekennzeichnet, daß die Walzen (16,17,18,19; 30,31,32,33) in einem gemeinsamen Rahmen (22) angeordnet sind, der quer zur Längsachse des Endlosbandes (13) verschiebbar ist.

9. Vorrichtung nach Anspruch 8, gekennzeichnet durch Antriebsmotoren (27,28) zur Querverschiebung des Rahmens (22), die durch eine Datenverarbeitungsanlage (15) angesteuert werden, die die von einer optischen Einrichtung (14) kommenden Signale, die die Lage der Glasscheibe (1) auf dem Endlosband (13) wiedergeben, auswertet.

10. Vorrichtung nach Anspruch 8 oder 9, dadurch gekennzeichnet, daß der Rahmen (22) winkelverdrehbar gelagert ist.

11. Vorrichtung nach einem oder mehreren der Ansprüche 1 bis 10, dadurch gekennzeichnet, daß das Endlosband (13) aus einem Gewebe oder Gewirk aus Fäden besteht, deren Elementarfasern aus einer Chrom-Nickel-Legierung bestehen und einen Durchmesser von weniger als 50 Mikrometern und vorzugsweise von weniger als 20 Mikrometern aufweisen.

## Claims

1. Device for bending glass sheets (1, 1') in a horizontal position, comprising a bending station (4) with a bending mould (5) disposed above the conveying level for the glass sheets (1, 1') and an endless belt (13), guided by rollers (16, 17, 18, 19; 30, 31, 32, 33) made of a heat-resistant, flexible material, conveying the glass sheet (1, 1'), heated to bending temperature, from a furnace (3) to the bending station (4) and from this station to a toughening or cooling station (8), characterized in that the upper roller (17, 31) disposed at the exit from the bending station (4) has a curvature which corresponds to the transverse curvature of the bent glass sheet (1'), the next lower roller (18, 32) having a shape complementary to that of the roller (17, 31) so as to compensate the differences in length between the central part and the lateral parts of the endless belt (13) due to the curvature of the roller (17, 31).

2. Device according to Claim 1, characterized in that the upper rollers (17, 31) and lower rollers (18, 32) have the shapes of paraboloids of revolution of opposite signs.

3. Device according to Claim 1, characterized in that the upper (31) and lower (32) rollers are each composed of a rod (round bar 34, 35) with a curved central section and of a flexible sleeve (36) in rotary bearing on the rod (34, 35), the sleeve being made of a torsion-resistant, flexible material.

4. Device according to Claim 3, characterized in that the flexible sleeves (36) are driven at the same tangential speed as the straight cylindrical rollers (30, 33) situated at the side nearest the furnace (3).

5. Device according to Claim 3 or 4, characterized in that the curved rods (34, 35) of the rollers (31, 32) are mounted in angularly adjustable manner.

6. Device according to Claim 5, characterized in that the curved rods (34, 35) are coupled in opposite rotational directions.

7. Device according to one of Claims 1 to 6, characterized in that, for the purpose of positioning the glass sheet (1) in the bending station (4), the drive motor (20) for the endless belt (13) is controlled by a data processing unit (15) analysing signals coming from an optical device (14), which signals represent the position of the glass sheet (1) on the endless belt (13).

8. Device according to one of the preceding Claims, characterized in that the rollers (16, 17, 18, 19; 30, 31, 32, 33) are disposed on a common frame (22), capable of displacing transversely relative to the longitudinal axis of the endless belt (13).

9. Device according to Claim 8, characterized by motors (27, 28) for the transverse displacement of the frame (22), controlled by a data processing unit (15) analysing signals coming from an optical device (14), which signals represent the position of the glass sheet (1) on the endless belt (13).

10. Device according to Claim 8 or 9, characterized in that the frame (22) is mounted at an adjustable angle.

11. Device according to one or more of Claims 1 to 10, characterized in that the endless belt (13) is made from a woven or knitted fabric of threads, the elementary fibres of which, of chrome-nickel alloy, have a diameter of less than 50 microns and preferably less than 20 microns.
